Europäisches Patentamt

European Patent Office

Office européen des brevets

(11) Publication number: **0 068 639**
**B1**

(19)

# (12) EUROPEAN PATENT SPECIFICATION

(45) Date of publication of patent specification: **20.08.86**

(51) Int. Cl.⁴: **B 60 N 1/06**, A 47 C 1/024

(21) Application number: **82302744.6**

(22) Date of filing: **27.05.82**

(54) **An adjustable recline-control mechanism.**

(30) Priority: **24.06.81 GB 8119428**

(43) Date of publication of application:
**05.01.83 Bulletin 83/01**

(45) Publication of the grant of the patent:
**20.08.86 Bulletin 86/34**

(84) Designated Contracting States:
**BE DE FR GB IT NL SE**

(56) References cited:
**EP-A-0 029 763**
**DE-A-2 640 528**
**FR-A-2 454 042**
**GB-A-1 163 093**
**GB-A-2 017 810**
**GB-A-2 050 153**

(73) Proprietor: **IMPERIAL CHEMICAL INDUSTRIES PLC**
**Imperial Chemical House Millbank**
**London SW1P 3JF (GB)**

(72) Inventor: **Robinson, James Derek**
**3 The Jinnings**
**Welwyn Garden City Hertfordshire (GB)**

(74) Representative: **Rhind, John Lessels et al**
**Imperial Chemical Industries PLC Legal**
**Department: Patents PO Box 6**
**Welwyn Garden City Herts, AL7 1HD (GB)**

Courier Press, Leamington Spa, England.

## Description

This invention relates to an adjustable recline-control mechanism suitable for use in furniture of the kind comprising a carrier, such as a seat or bed, and a reclinable support, such as a back-rest or an arm-rest, which is adjustably reclinable relative to the carrier.

Recline-control mechanisms of the various kinds have been proposed for use in a variety of adjustable furniture, particularly in seats for use in passenger transport systems, such as motor vehicles and aircraft. In general, such mechanisms involve cooperating elements respectively associated with the relatively reclinable components of the furniture, and include a telescopic linkage in which a threaded rod is rotatably mounted within a non-rotatable fixedly-coupled sleeve to provide continuously variable adjustment of the angle of recline.

British Patent publication GB—A—2017810 discloses a continuously variable device for adjusting the inclination between a first and second member in which at least one screw-threaded shank is threaded into a sleeve to form an adjustable length member each end of which is pivotally connected to one of the first and second members. Actuation of a driving means rotates the sleeve, and enables the inclination between the first and second members to be adjusted. In one embodiment a single shank engages in a sleeve, a support therefor being pivotally connected to one of the first and second members.

Recline-control mechanisms of the kind disclosed in the prior art are conventionally fabricated from metals to provide the required degree of strength. However, such construction entails that the components parts are machined to close tolerances, which is an expensive operation, and that the mechanism must be regularly lubricated, which is often difficult to achieve in view of the frequently inaccessible location of the mechanism — for example, on the underside of a vehicle seat pan. Lack of lubrication increases the wear experienced by the various components and this in turn generates unacceptable chatter and vibration when, for example, the vehicle is in motion. Mechanisms fabricated from metals are also undesirably heavy.

Fabrication of a recline-control mechanism from plastics polymeric components offers the advantages of easy and cheap manufacture, for example — by injection moulding, eliminates the need to machine components to close tolerances, avoids the requirement for regular lubrication, eliminates noise, and offers a significant reduction in weight. However, we have observed that direct substitution of a polymeric for a metallic component does not yield a recline-control mechanism offering acceptable performance. In particular, we have found that significant changes in geometry, especially in relation to screw configuration, are important if adequate performance is to be achieved with a plastics mechanism.

We have now devised an adjustable recline-control mechanism which is suitable for fabrication from light-weight polymeric components.

With regard to GB—A—2017810 which describes an adjustable recline-control mechanism for use in controlling the inclination of a support reclinable relative to an associated carrier, in particular for the seat of a motor vehicle or for an article of furniture, comprising

a rotatable collar member having a helical groove in the bore thereof,

mounting means for axially fixedly positioning the collar member relative to said carrier,

a shaft member located in the collar member, said shaft member having a helical thread on the surface thereof for engagement in said helical groove,

drive means for rotating the collar member to effect axial movement of the shaft member relative to the collar member, and

linkage means for coupling the shaft member to the support whereby said axial movement is transmitted to the support thereby to alter the inclination thereof, the present invention is characterised in that at least the shaft member and one of the collar member, mounting means, drive means and linkage means is fabricated from a polymeric plastics material and the diameter:length ratio of the shaft member is from 0.1:1 to 0.4:1.

Unless otherwise indicated the term "axial movement" is herein employed to indicate movement in a direction along or parallel to the longitudinal axis of the shaft member, and the collar member is "axially fixedly positioned" when it is incapable of significant movement in that direction although it may be free to move in other directions, e.g. by rotation about an axis substantially parallel to the inclination axis about which the support and carrier are relatively reclinable.

For ease of description the invention is hereinafter described in relation to motor vehicle seats, although the recline-control mechanism may be incorporated into alternative items of furniture and equipment.

The shaft member is of substantially cylindrical configuration having a helical thread extending along the surface thereof for engagement in a mating helical recess in the cylindrical bore of the cooperating collar member.

Desirably, the thread pitch on the shaft should be relatively large — for example, from 8 to 25, and preferably about 15, complete turns of thread along the shaft length. Likewise, the diameter of the shaft, and of the bore in the collar, should be large, a suitable shaft exhibiting a diameter:length ratio of from 0.1:1 to 0.4:1 and, preferably, of the order of 0.2:1.

The collar comprises an open-ended sleeve having an internal bore to receive therein a close-fitting shaft, the axial dimension of the collar being such that in a median position of the recline-control mechanism the shaft extends through and beyond each of the open ends of the collar. The axial dimension of the collar is therefore less than that of the shaft but should be such as will provide adequate strength to withstand axial loads transmitted from the shaft during operation of the recline-control mechanism. Typically, the axial dimension of the collar is from 0.1 to 0.5, and preferably from 0.2 to 0.3, of the axial dimension of the shaft.

The internal bore of the collar comprises a helical groove for engagement with the cooperating helical thread on the external surface of the shaft. In this context it will be appreciated that the thread and groove terminology herein employed is relatively interchangeable and that, for example, by increasing the width of a helical groove in the internal surface of the collar the separation between adjacent turns of the groove is reduced and the land area between these adjacent turns is effectively transformed into a helical thread upstanding from the surface of the collar. Effectively therefore either one of the shaft and collar may be grooved for engagement with a cooperating thread on the other.

A mounting means is provided for axially fixedly positioning the collar relative to the carrier in a suitable operative position. For example, in a vehicle seat assembly the collar may be mounted on the inner surface of the side-frame or pan wall of the seat so that the longitudinal axis of the cooperating shaft extends in a direction (the axial direction) generally parallel or, preferably, slightly inclined, relative to the basal edge of the side-frame or pan wall.

The mounting means for the collar may be rigidly secured to, or integral with, the carrier so that the shaft is constrained to travel only in a single axial direction, or the mounting means may be such that the collar is axially fixedly positioned but simultaneously possessed of a degree of freedom of movement in at least one other direction so that the axial direction of shaft travel is variable — at least to a limited degree. For example, the mounting means may be such that the collar is capable of pivotal movement about an axis substantially parallel to the axis of inclination about which the support and carrier are relatively reclinable. A trunnion bearing provides a convenient means of axially fixedly positioning the collar relative to the carrier while permitting sufficient pivotal or oscillatory movement of the collar to accommodate the changing inclination of the shaft on axial movement thereof to incline the support relative to the carrier.

Desirably, the mounting means comprises a thrust bearing for axial engagement with at least one, and preferably each, of the end faces of the collar to brace the collar against the axial thrust generated either in driving the shaft axially through the collar or in resisting forces arising from the application of fore and aft loads against the support. A rigid mounting conveniently comprises a pair of sleeve bearings, suitably buttress-mounted on the carrier and axially spaced apart to accommodate the collar, the latter being retained in the mounting by the shaft passing through the bore of the collar and of the sleeve bearing(s). In an alternative form of mounting each of a pair of sleeve bearings is mounted in axially spaced apart relationship on the respective limbs of a stirrup assembly which, in turn, is mounted for pivotal movement relative to the carrier, for example — by a trunnion bearing assembly, the shaft, extending through the sleeve bearings, again serving to retain the collar in position between said bearings.

A sleeve bearing mounting permits easy assembly of the recline-control mechanism by threading the shaft through the sleeve bearing(s) and an aligned collar before attaching the shaft to the support by a simple linkage. No other fixing component, such as a shell bearing or an additional bolt-on element, is required.

A sleeve bearing mounting assembly of the aforementioned kind in which the bore of each sleeve is dimensioned for close fitting engagement with the external extremities of the shaft not only provides axial thrust support against the external end faces of the open-ended collar but also provides support for the shaft against displacement in a plane substantially normal to the longitudinal axis thereof, thereby facilitating the production of a relatively rigid and strong but compact and lightweight mounting assembly.

Axial movement of the shaft relative to the axially fixed collar is effected by drive means which do not displace the shaft about the longitudinal axis thereof. The recline control mechanism, therefore, comprises a rotatable collar member having in the internal bore thereof a helical groove to receive in cooperating engagement the helical thread on the external surface of a non-rotatable shaft. Rotation of the grooved collar about the longitudinal axis of the threaded shaft therefore effects axial movement of the shaft — forwardly or rearwardly, relative to the carrier, as desired. The collar must therefore be rotatably supported in the mounting means.

The drive means for effecting axial displacement of the shaft preferably operates as an indirect drive — for example, by cooperation with the collar, particularly with the external circumferential surface thereof, to effect the desired shaft displacement. Rotation of the collar to displace the non-rotatable shaft is effected by any convenient means — for example, by suitably cooperating bevel gears attached respectively to the collar and a prime mover or hand wheel, or by a worm gear system, the latter, being low-geared, being particularly suitable for incorporation into a powered unit — driven, for example, by an electric motor.

Indirect drive means enable the recline-control mechanism to be of compact design — for example, with the hand wheel (if employed) conveniently located externally of the side-frame of the seat.

To facilitate operation of a manually driven mechanism powered by a hand wheel the required range of inclination of the support should desirably involve comparatively few rotations of the hand wheel. A pair of manually driven bevel gears cooperating at a bevel ratio of 1:1 to rotate a collar to drive a cooperating shaft in an axial direction effects adequate inclination of a support relative to a carrier.

The linkage means coupling the shaft to the support is such that reversible inclination of the support relative to the carrier may be achieved in response to appropriate displacement of the shaft, and may be an indirect or direct linkage. A suitable indirect linkage comprises an indirect link member the ends of which are respectively pivotally connected to the (tail) end of the shaft and to the support, such as a component element of the back rest support of a vehicle seat, whereby axial displacement of the shaft is transmitted through the indirect link member, which is displaceable in a plane substantially parallel to the side of the seat carrier, to effect inclination of the back rest support about a pivotal axis of inclination substantially normal to the side of the seat carrier. An indirect linkage is generally required if the collar mounting means is rigidly attached to the carrier and is not free to rotate relative thereof, and if displacement of the support through a relative angle of inclination greater than about 25° is desired.

Alternatively, the proximal end of the non-rotatable shaft, i.e. the rear end of the shaft adjacent the back support element of the seat, may be coupled directly to a tail portion of the back support element, for example by a simple pivot pin linkage. Simplification of the linkage assembly in this way, by elimination of an indirect link member spanning the gap between the non-rotatable shaft and tail portion of the back support, increases the rigidity of the linkage and is feasible when the collar mounting is pivotal relative to the carrier to accommodate the changing inclination of the shaft on axial displacement thereof. Elimination of the indirect link member is also possible with a non-pivotal collar mounting provided the coupling between the shaft and back support is adapted to accommodate the changing shaft inclination — for example, by incorporating a slightly elongated slot in the coupling. An adaptation of this kind is better suited to an assembly in which the desired inclination of the support relative to the carrier is less than about 25°.

As the shaft is attached either directly or indirectly to an extension of the support, a load applied against the support generates a resistance substantially in-line with the longitudinal axis of the shaft and bearings. This is of great benefit in distributing such load inputs in an efficient manner.

Whether the linkage coupling the shaft to the reclinable support is indirect or direct, it is evident that the collar, which is positioned intermediate the ends of the shaft, is divorced from the support and is not directly connected thereto.

Provision of a recline-control mechanism at only one side of a reclinable seat, permitting free pivotal movement of the support relative to the carrier at the other side of the seat, requires that both the carrier and support are of relatively robust construction to withstand the imposed stresses. For reasons of structural efficiency it is therefore preferred to provide simultaneous recline-control at both sides of the seat. A recline-control mechanism according to the invention is particularly suitable for such duplicate operation.

The shaft member and at least one of the collar member, mounting means, drive means, and linkage means of a mechanism according to the invention is suitably fabricated, for example, by moulding, from a polymeric plastics material which provides a relatively lightweight assembly requiring little or no lubrication. Suitably the shaft and such other member(s) are moulded from a polyamide, such as polyhexamethylene adipamide, optionally containing a reinforcing agent — such as glass fibre.

The bevel, worm or other gears, serving only to rotate the collar, are not subject to particularly heavy stress during operation of the mechanism, and may also be fabricated from thermoplastics polymeric materials. In particular, a bevel gear may be moulded as an integral component of the polymeric collar.

Support and carrier components with which the recline-control mechanism of the invention is associated may be fabricated from any suitable materials including metals, such as steel, and thermoplastics polymeric materials, particularly a substantially crystalline polyolefin such as a homo- or co-polymer of propylene — optionally reinforced with a reinforcing agent, such as glass fibre. If desired a combination of metallic and polymeric components may be employed in the construction of such components.

Polymeric components employed in a recline-control mechanism according to the invention, and in the associated support and carrier, may be in the form of either solid mouldings or structural foams, that is — a structure comprising a foamed core enclosed within a solid skin.

A recline-control mechanism fabricated from lightweight materials, such as polymeric plastics, is particularly suitable for incorporation into automobile seats. The mechanism is also of utility in items of furniture such as chairs, settees (with inclinable end portions) and beds, and is particularly suitable for incorporation into items of garden furniture for which the low-density, strength and corrosion-resistant characteristics of polymeric structural plastics are particularly suitable.

The invention is illustrated by reference to the accompanying drawings which are not to the same scale and in which

Figure 1 is a fragmental perspective view of a recline-control mechanism located internally on the perimeter frame of the carrier portion of a vehicle seat,

Figure 2 is a fragmental schematic side elevation of a similar assembly viewed from within the perimeter frame, and including an indirect linkage member to permit increased inclination of the support,

Figure 3 is a sectional end view on the line III—III of Figure 2,

Figure 4 is a schematic plan view of the recline-control assembly of Figure 2,

Figure 5 is a fragmental plan view of a recline-control mechanism with a bevel gear drive,

Figure 6 is a sectional end view on the line VI—VI of Figure 5,

Figure 7 is a schematic fragmental side elevation of a trunnion-mounted recline-control mechanism in a vehicle seat pan with direct linkage to the back support element of the seat.

Figure 8 is a sectional view on the line VIII—VIII of Figure 7,

Figure 9 is a schematic plan view of the assembly of Figure 7,

Figure 10 is a schematic perspective view of a trunnion bearing,

Figure 11 is a schematic side elevation of a pan-mounted recline-control mechanism with a toothed collar adapted to receive a drive belt, and

Figure 12 is a simplified schematic front elevation of the assembly of Figure 11 in which a toothed belt cooperates with the toothed collar to effect simultaneous operation of a pair of recline-control mechanisms respectively located on the opposed internal side walls of the seat pan.

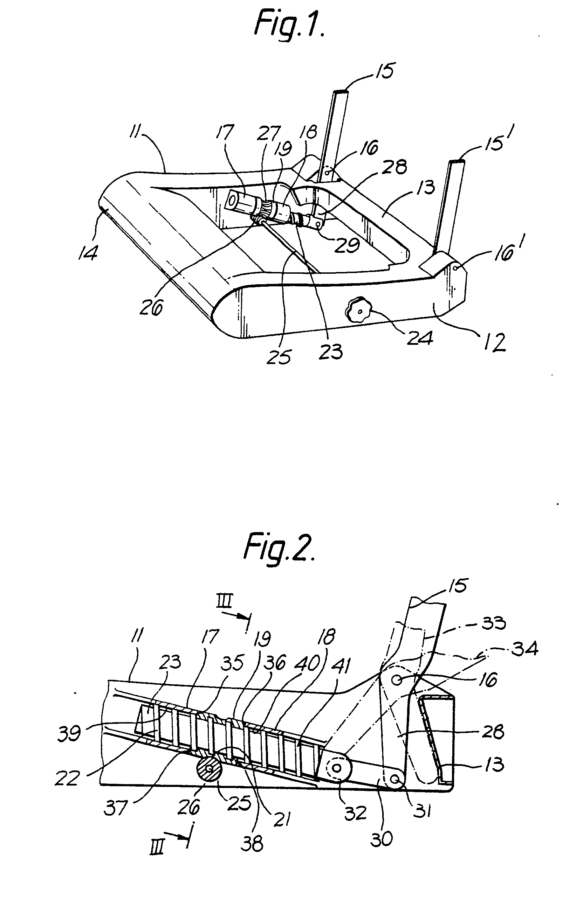

Referring to Figures 1 to 4 of the drawings, the subframe of a vehicle seat pan comprises a pair of glass-fibre reinforced polypropylene side-frames 11, 12 integrally moulded with a rear frame 13 and a front frame 14. An element 15, 15' of a back rest support frame is mounted for inclination about a pivot 16, 16' in the side frame.

Between thrust bearing mountings 17, 18 fixedly attached to side-frame 11 is supported an annular rotatable collar 19 of polyamide, such as polyhexamethylene adipamide, (unfilled or reinforced with glass fibres, if desired), collar 19 having on the internal surface of cylindrical bore 20 a helical groove 21 for engagement with a cooperating helical thread 22 on the external surface of a non-rotatable shaft 23 also moulded from polyamide. Rotation of collar 19, by means of knurled hand-wheel 24 attached to rotatable transverse drive shaft 25 to which is secured a worm gear 26 cooperable with teeth 27 integral with collar 19, effects axial movement of shaft 23 through collar 19.

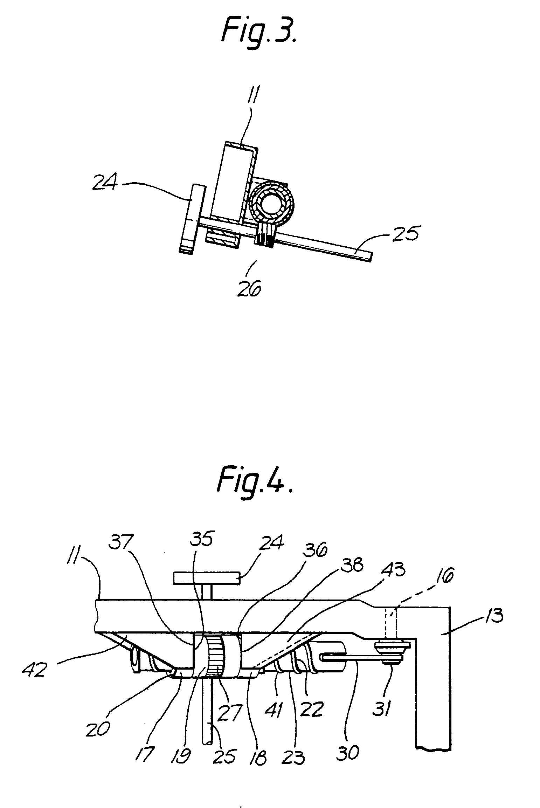

Hand-wheel 24 may be located, as convenient, against either of pan side walls 11 (Figure 4) or 12 (Figure 1).

As shown in Figure 1, shaft 23 is linked to the tail portion 28 of back rest support element 15 by a direct linkage pin 29. Alternatively, as shown in Figure 2, the respective ends of an indirect linkage member 30 are pivotally secured by pins 31 and 32 to the tail portion 28 of back rest support element 15 and to the tail end of shaft 23 whereby axial movement of shaft 23 effects inclinations of element 15 about pivot 16.

The available range of angular adjustment of the indirectly linked back rest support element 15 is illustrated in Figure 2 wherein the broken line representations 33, 34, respectively depict the element in its fully forward and reclined positions.

Preferably, a duplicate recline-control mechanism (not shown) driven by a second worm gear (not shown) on transverse drive shaft 25, is located at the inner surface of side-frame 12 to assist simultaneous inclination of back rest element 15' in a manner similar to that herein described with reference to element 15.

The respective innermost end faces 35, 36 (Figures 2, 4) of bearing mountings 17, 18 abut the external end faces 37, 38 of collar 19 thereby providing effective axial thrust support for the collar when the recline-control mechanism is activated. Likewise, the respective smooth internal bore surfaces 39, 40 of bearing mountings 17, 18 bear against the outer extremities 41 of the closely fitting thread 22 on shaft 23 thereby supporting shaft 23 against displacement in a plane substantially normal to the longitudinal axis of the shaft.

If desired, bearing mountings 17, 18 may incorporate buttresses 42, 43 (Figure 4) integral with the wall of side-frame 11 to provide additional axial support.

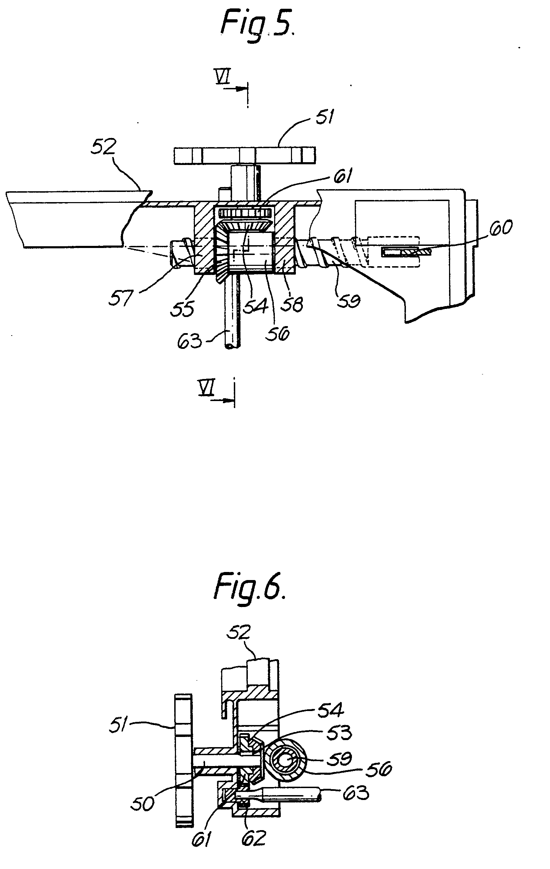

Referring to Figures 5 and 6 of the drawings, a stub drive shaft 50 to the outer end of which is secured a hand-wheel 51 is rotatably located in the side wall 52 of an injection moulded carrier pan of a motor vehicle seat. To the inner end of stub shaft 50 is secured by a key 53 a bevel gear 54 for engagement with a cooperable bevel gear 55 integral with a rotatable collar 56 supported between axial bearings 57, 58 fixedly attached to the inner surface of side wall 52. Rotation of hand-wheel 51 therefore causes collar 56 to rotate, thereby effecting axial displacement of threaded shaft 59 in the tail end of which is a slot 60 to receive the tail portion of a back rest support element (not shown).

Intermediate the ends of stub shaft 50 is secured, also by key 53, a spur gear wheel 61 (optionally integrally moulded with bevel gear 54) for engagement with a cooperating spur gear wheel 62 rotatably mounted in side wall 52 and fixedly secured to a transverse shaft 63 whereby rotary movement of hand-wheel 51 is transmitted to transverse shaft 63 thereby to activate a duplicate recline-control mechanism (not shown) located at the internal surface of the opposite side wall (not shown) of the seat pan. Simultaneous activation of both recline-control mechanisms is thereby effected on rotation of hand-wheel 51.

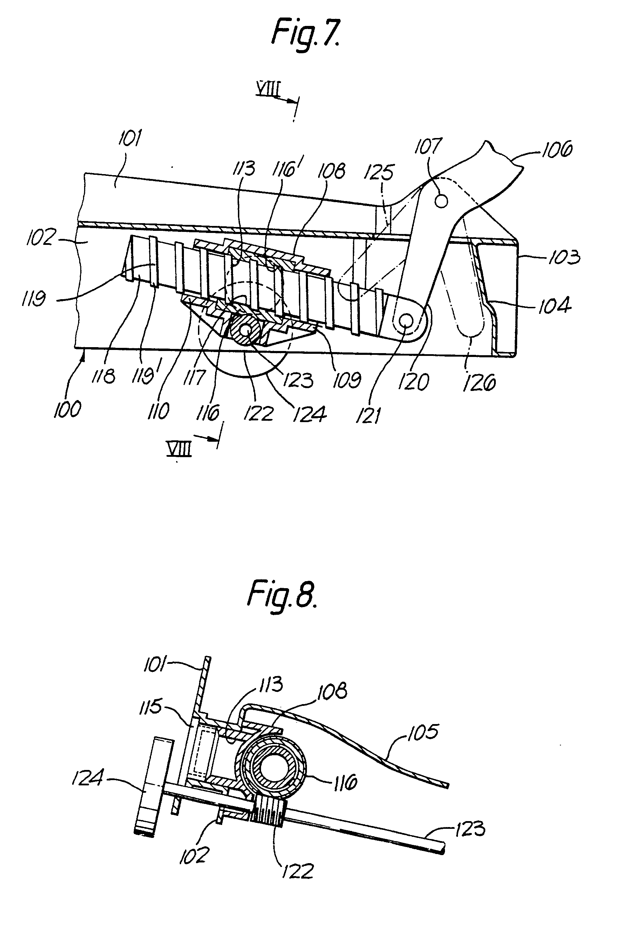

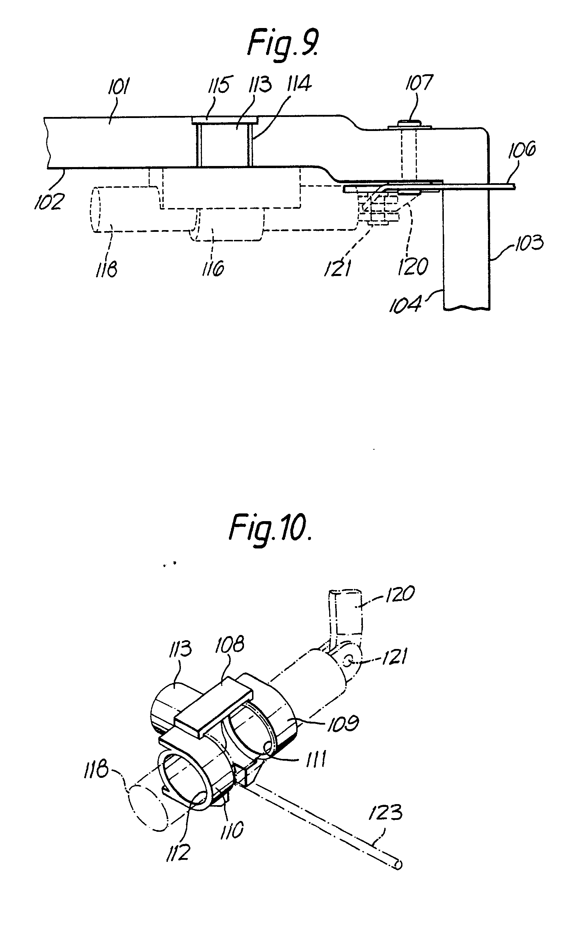

Referring to Figures 7 to 10 of the drawings, a vehicle seat assembly comprises an injection moulded polypropylene seat pan generally designated 100, having a multi-skin first side wall comprising an outer panel 101 and an inner panel 102 and a rear wall comprising ribs 103 and panel 104. The seat pan additionally comprises an opposed second side wall and a front wall (not shown) of similar construction and an upper bearing surface 105. An element 106 of a back rest support frame is mounted for inclination about a pivot pin 107 in the side wall.

A forked trunnion stirrup bearing 108 comprising a pair of spaced apart sleeve thrust bearings 109, 110, with respective internal bores 111, 112, mounted on a hollow support shaft 113 is located in a housing 114 in the first side wall and rotatably secured therein by a retaining cap 115 for pivotal movement about the axis of shaft 113, i.e. in a plane substantially parallel to internal wall panel 102.

An annular collar 116 having a helical groove 116′ in the cylindrical bore 117 thereof is journaled in trunnion bearing 108 for rotation about an axis substantially normal to that of support shaft 113.

A shaft 118 having on the surface thereof a helical thread 119 (with a crest 119′) for engagement in the cooperating groove in bore 117 of collar 116 is axially slidably located in the bores 111, 112 of trunnion bearing 108, and is directly coupled to the tail portion 120 of back support element 106 by a pivotal linkage pin 121.

A worm gear 122 secured to rotatable transverse drive shaft 123 effects rotation of collar 116 on actuation of rotary hand-wheel 124.

Rotation of shaft 118 being prevented by the nature of linkage pin 121, and linear movement of collar 116 relative to wall panel 102 being prevented by the nature of trunnion bearing 108, rotation of collar 116 effects axial movement of shaft 118 thereby effecting inclination of back support element 106 about pivot 107.

The available range of angular adjustment (60° as drawn) of back rest support element 106 is illustrated in Figure 7 wherein the broken line representations 125, 126 depict the element at its extremities of inclination.

Preferably, transverse drive shaft 123 is extended to effect simultaneous operation of a duplicate recline-control mechanism (not shown) located at the inner surface of the opposed second side wall to assist uniform inclination of the backrest.

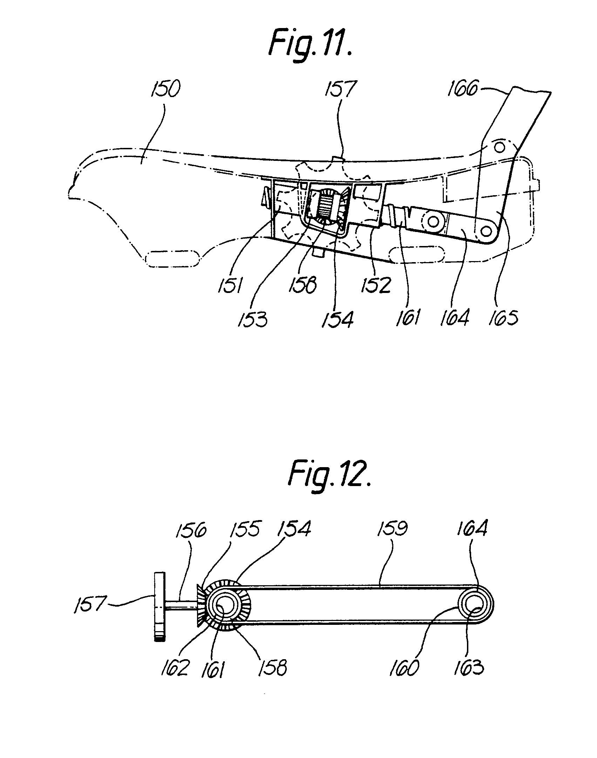

Referring to Figures 11 and 12 of the drawings, a recline-control mechanism mounted on the inner surface of the side wall 150 of a vehicle seat pan comprises a pair of sleeve bearings 151, 152 between which is rotatably supported a collar 153 having an integral bevel gear 154 for engagement with a cooperating bevel gear 155 secured to one end of a rotatable stub drive shaft 156 to the other end of which is secured a hand-wheel 157.

The external circumferential surface of collar 153 comprises an array of teeth 158 for engagement with the teeth (not shown) of a toothed endless transverse drive belt 159 which extends across the interior of the seat pan to cooperate with a second externally toothed collar 160 similarly mounted at the opposite side wall of the seat pan.

A non-rotatable threaded shaft 161 is located in the grooved bore 162 of collar 153, and a similar threaded shaft 163 is located in the bore 164 of the second collar 160.

Rotation of hand-wheel 157 therefore rotates collar 153 via cooperating bevel gears 154, 155 and simultaneously rotates second collar 160 via transverse drive belt 159, thereby effecting simultaneous axial displacement of shaft 161, which is coupled through an indirect linkage member 164 to the tail portion 165 of back rest support element 166, and of the similar shaft 163 in the bore 164 of collar 160.

**Claims**

1. An adjustable recline-control mechanism for use in controlling the inclination of a support (15; 106; 166) reclinable relative to an associated carrier (11; 52; 100; 150), in particular for the seat of a motor vehicle or for an article of furniture, comprising

a rotatable collar member (19; 56; 116; 153) having a helical groove in the bore thereof,

mounting means (17, 18; 57, 58; 108; 151, 152) for axially fixedly positioning the collar member relative to said carrier

a shaft member (23, 59; 118; 161) located in the collar member, said shaft member having a helical thread on the surface thereof for engagement in said helical groove,

drive means (26; 54; 122; 155) for rotating the collar member to effect axial movement of the shaft member relative to the collar member, and linkage means (29; 30; 60; 121) for coupling the shaft member to the support whereby said axial movement is transmitted to the support thereby to alter the inclination thereof, characterised in that at least the shaft member (23; 59; 118; 161) and one of the collar member (19; 56; 116; 153) mounting means (17, 18; 57, 58; 108; 151, 152) drive means (26; 54; 122; 155) and linkage means (29, 30; 60; 121) is fabricated from a polymeric plastics material, and in that the diameter:length ratio of the shaft member is from 0.1:1 to 0.4:1.

2. A mechanism according to claim 1, characterised in that the axial dimension of the collar member (19; 56; 116; 153) is from 0.1 to 0.5 of the axial dimension of the shaft member (23; 59; 118; 161).

3. A mechanism according to either of claims 1 and 2 characterised in that from 8 to 15 complete turns of the helical thread (22; 119) are provided along the length of the shaft member.

4. A mechanism according to any one of the preceding claims characterised in that the polymeric plastics material is a polyamide.

5. A mechanism according to any one of the preceding claims characterised in that the polymeric plastics material comprises a reinforcing agent.

**Patentansprüche**

1. Verstellbarer Neigungsregelmechanismus zur Anwendung bei der Regelung der Neigung einer Lehne (15; 106; 166) die zu einem mit ihr verbundenen Sitzkörper (11; 52; 100; 150) in ihrer Neigung verstellbar ist, wobei der Mechanismus insbesondere für den Sitz eines Kraftfahrzeugs oder für ein Möbelteil anwendbar ist und aufweist eine drehbare Muffe (19; 56; 160; 153), die in ihrer Bohrung mit einer schraubenförmigen Nut versehen ist, eine Halteeinrichtung (17, 18; 57, 58;

108; 151, 152) zur festen axialen Positionierung der Muffe in bezug auf den Sitzkörper, eine Welle (23; 59; 118; 161), die in der Muffe sitzt und auf ihrer Oberfläche ein Schraubengewinde zum Eingriff in die schraubenförmige Nut aufweist, eine Antriebseinrichtung (26; 54; 122; 155) zur Drehung der Muffe, so daß die Welle in bezug auf die Muffe axial bewegt wird, und ein Koppelglied (29; 30; 60; 122) zur Verbindung der Welle mit der Lehne, wodurch die Axialbewegung auf die Lehne übertragen wird und dadurch die Neigung der Lehne geändert wird, dadurch gekennzeichnet, daß zumindest die Welle (23; 59; 118; 161) und die Muffe (19; 56; 116; 153) oder die Halteeinrichtung (17, 18; 57, 58; 108; 151, 152) oder die Antriebseinrichtung (26; 54; 122; 155) oder das Koppelglied (29, 3; 60; 121) aus einem polymeren Kunststoffwerkstoff hergestellt sind und daß das Durchmesser/Länge-Verhältnis der Welle zwischen 0,1:1 und 0,4:1 liegt.

2. Mechanismus nach Anspruch 1, dadurch gekennzeichnet, daß die axiale Abmessung der Muffe (19; 56; 116; 153) zwischen 0,1 bis 0,5 der axialen Abmessung der Welle (23; 59; 118; 161) beträgt.

3. Mechanismus nach einem der Ansprüche 1 oder 2, dadurch gekennzeichnet, daß zwischen 8 und 15 volle Umdrehungen des Schraubengewindes (22; 119) über die Länge der Welle vorgesehen sind.

4. Mechanismus nach einem der vorangehenden Ansprüche, dadurch gekennzeichnet, daß der polymere Kunststoffwerkstoff ein Polyamid ist.

5. Mechanismus nach einem der vorangehenden Ansprüche, dadurch gekennzeichnet, daß der polymere Kunststoffwerkstoff ein verstärkendes Agens umfaßt.

**Revendications**

1. Mécanisme de réglage d'inclinaison, utilisable pour régler l'inclinaison d'un support (15; 106; 166) inclinable par rapport à une base associée (11, 52; 100; 150), en particulier pour le siège d'un véhicule à moteur ou pour un article d'ameublement, comprenant: un manchon tournant (19; 56; 116; 153) dont l'alésage comporte une gorge hélicoïdale; des moyens de montage (17, 18; 57, 58; 108; 151, 152) pour maintenir en position axialement fixe le manchon par rapport à la base; un arbre (23; 59; 118; 161) placé dans le manchon, cet arbre comportant sur sa surface un filet hélicoïdal pour engagement dans la gorge hélicoïdale; des moyens d'entraînement (26; 54; 122; 155) pour faire tourner le manchon de manière à effectuer un déplacement axial de l'arbre par rapport au manchon; et des moyens de liaison (29, 30; 60; 121) pour relier l'arbre au support de sorte que ledit déplacement axial est transmis au support afin de modifier son inclinaison, caractérisé en ce qu'au moins l'arbre (23; 59; 118; 161) et l'un du manchon (19; 56; 116; 153), des moyens de montage (17, 18; 57, 58; 108; 151, 152), des moyens d'entraînement (26; 54; 122; 155) et des moyens de liaison (29, 30; 60; 121), sont fabriqués en une matière plastique polymérisée, et en ce que le rapport du diamètre à la longueur de l'arbre est compris entre 0,1:1 et 0,4:1.

2. Mécanisme suivant la revendication 1, caractérisé en ce que la dimension axiale du manchon (19; 56; 116; 153) est de 0,1 à 0,5 fois la dimension axiale de l'arbre (23; 59; 118; 161).

3. Mécanisme suivant la revendication 1 ou 2, caractérisé en ce que de 8 à 15 tours complets du filet hélicoïdal (22; 119) sont prévus sur la longueur de l'arbre.

4. Mécanisme suivant l'une quelconque des revendications précédentes, caractérisé en ce que la matière plastique polymérisée est un polyamide.

5. Mécanisme suivant l'une quelconque des revendications précédentes, caractérisé en ce que la matière plastique polymérisée comprend un agent de renforcement.

## Fig.1.

## Fig.2.

## Fig.3.

## Fig.4.

## Fig.5.

## Fig.6.

# Fig.7.

# Fig.8.

# Fig.9.

# Fig.10.

5

## Fig.11.

## Fig.12.